# EUROPEAN PATENT SPECIFICATION

(11) **EP 2 521 385 B1**
(45) Date of publication and mention of the grant of the patent: **05.10.2016**
(21) Application number: 10840570.5
(22) Date of filing: 28.12.2010
(51) Int. Cl.: H04W 4/24, H04L 12/14, H04L 12/813, H04L 12/66, H04L 12/801, H04L 12/851

(54) **POLICY AND CHARGING CONTROL METHOD, GATEWAY AND MOBILE TERMINAL THEREOF**
RICHTLINIEN- UND VERRECHNUGNSKONTROLLVERFAHREN, GATEWAY UND MOBILES ENDGERÄT DAGÜR
PROCÉDÉ DE COMMANDE DE POLITIQUE ET DE FACTURATION, PASSERELLE ET TERMINAL MOBILE ASSOCIÉS

(30) Priority: 30.12.2009 CN 200910261819
(43) Date of publication of application: 07.11.2012
(73) Proprietor: Huawei Technologies Co., Ltd., Longgang District Shenzhen, Guangdong 518129 (CN)
(72) Inventor: GUO, Dong, Shenzhen Guangdong 518129 (CN)
(74) Representative: Körber, Martin Hans
(86) International application number: PCT/CN2010/080384
(87) International publication number: WO 2011/079782

(56) References cited:
- CN-A- 1 531 287
- CN-A- 1 984 402
- CN-A- 101 582 777
- CN-A- 101 800 967
- 3GPP-STANDARDS, 2500 WILSON BOULEVARD, SUITE 300, ARLINGTON, VIRGINIA 22201 USA, September 2005 (2005-09), XP040278759,
- "3rd Generation Partnership Project; Technical Specification Group Services and System Aspects; Policy and charging control architecture (Release 9)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 10 December 2009 (2009-12-10), pages 1-123, XP050400588, [retrieved on 2009-12-10]
- J-J P BALBAS ET AL: "Policy and charging control in the evolved packet system", IEEE COMMUNICATIONS MAGAZINE, IEEE SERVICE CENTER, PISCATAWAY, US, vol. 47, no. 2, 1 February 2009 (2009-02-01), pages 68-74, XP011280741, ISSN: 0163-6804, DOI: 10.1109/MCOM.2009.4785382
- EKSTROM H: "QoS control in the 3GPP evolved packet system", IEEE COMMUNICATIONS MAGAZINE, IEEE SERVICE CENTER, PISCATAWAY, US, vol. 47, no. 2, 1 February 2009 (2009-02-01), pages 76-83, XP011280742, ISSN: 0163-6804, DOI: 10.1109/MCOM.2009.4785383

## Description

### FIELD OF THE INVENTION

The present invention relates to the field of mobile communications technologies, and in particular, to a method for implementing policy and charging control, a gateway, and a mobile terminal.

### BACKGROUND OF THE INVENTION

Mobile communications undergo evolution to a full IP network. In one aspect, the problem of end-to-end QoS (Quality of Service, quality of service) from a mobile terminal to a GW (Gateway, gateway) needs to be considered, so as to provide satisfied quality of service (especially, a real-time service, such as voice and video) for a customer. In another aspect, an IP network can provide many kinds of services (such as multimedia communication, file download, webpage browsing), which requires the GW to identify different traffic flows, gather their respective statistical information of traffic and duration, and report the statistic information to a charging center. In order to solve the relevant problem based on the QoS of the traffic flow and the charging, the 3GPP defines PCC (Policy and Charging Control, policy and charging control) logic architecture.

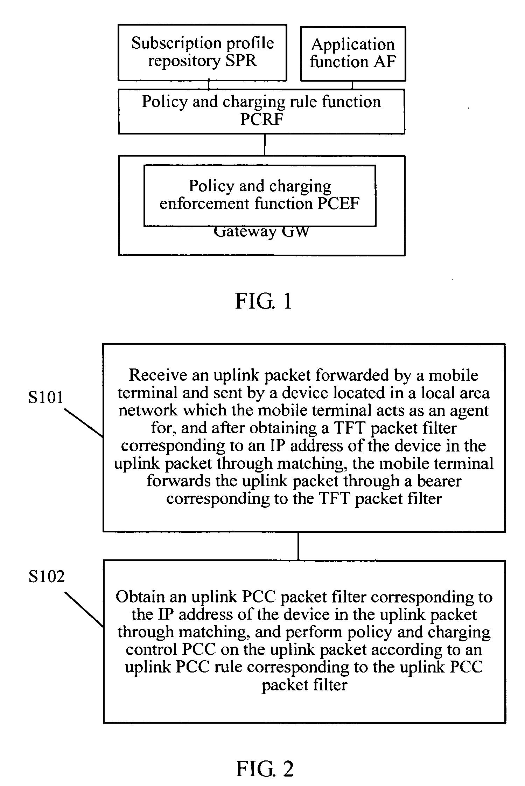

As shown in FIG. 1, the PCC logic architecture includes functional entities, such as a GW, a PCRF (Policy and Charging Rule Function, policy and charging rule function), a PCEF (Policy and Charging Enforcement Function, policy and charging enforcement function), an AF (Application Function, application function), and an SPR (Subscription Profile Repository, subscription profile repository). The AF dynamically provides session information (for example, an SDP) at an application layer for the PCRF according to service negotiation with a user. The PCRF makes a PCC (Policy and Charging Control, policy and charging control) rule according to service information in the session information provided by the AF in combination with user subscription information and a local operator policy, and sends the PCC rule to the PCEF in the GW. Since the SPR is configured with the user subscription information, the PCC rule on the PCRF may also be acquired from the SPR, that is, the PCC rule is pre-configured on the PCRF and/or the SPR. The PCEF enforces the PCC rule.

Currently, a packet filter (Packet Filter) is generally used to select and control the traffic flow. The packet filter includes a PCC packet filter, a TFT packet filter, and the like. The PCC protocol specifies that, each IP session includes multiple bearers, each bearer includes multiple PCC rules, and each PCC rule includes at least one PCC packet filter, a QoS parameter and a charging requirement for the PCC packet filter. Each PCC rule has a priority level. If one PCC packet filter corresponds to multiple PCC rules, it is considered that the unique PCC rule of the highest priority level corresponding to the PCC packet filter is valid. The PCC rule includes an uplink PCC rule and a downlink PCC rule. The PCC packet filter includes an uplink PCC packet filter and a downlink PCC packet filter. The PCC packet filter in the uplink PCC rule is the uplink PCC packet filter, and the PCC packet filter in the downlink PCC rule is the downlink PCC packet filter. The called PCC is QoS control, charging control, and the like.

The GPRS-related protocol in the 3GPP (3rd Generation Partnership Project, 3rd generation partnership project) specifies that, a bearer, a QoS profile (Quality of Service Profile), and a TFT (Traffic Flow Template, traffic flow template) are associated together, and one TFT includes at least one TFT packet filter. The TFT packet filter is a packet filter used by the mobile terminal and is obtained by converting, by the GW, the uplink PCC packet filter in the uplink PCC rule. Each TFT packet filter includes the following attributes:
- Remote Address and Subnet Mask.
- Protocol Number (IPv4)/Next Header (IPv6).
- Local Port Range.
- Remote Port Range.
- IPSec Security Parameter Index (SPI).
- Type of Service (TOS) (IPv4)/Traffic class (IPv6) and Mask.
- Flow Label (IPv6)

The GW converts the QoS parameter and packet filter information in the PCC, and delivers the converted QoS parameter and packet filter information to the mobile terminal in a format of a QoS profile or a TFT. The mobile terminal matches a packet sent by the GW with a TFT packet filter, and binds a traffic flow matched with a certain TFT packet filter to a corresponding bearer, so as to ensure QoS required by the traffic flow. The PCEF in the GW matches the traffic flow with the PCC packet filter, thereby implementing policy control (for example, whether to allow the traffic flow to pass, whether it is required to modify fields, such as an IP address in the packet) and charging for the traffic flow of the mobile terminal. Therefore, after detecting different traffic flows, a network side performs operations, such as policy control and charging statistics for the traffic flows.

During implementation of the present invention, it is found that the prior art at least has the following problems.

As the tariff is reduced and the bandwidth is increased in the mobile communication, a new application mode emerges, that is, multiple devices in a local area network (Local Area Network) are connected to an external network by sharing one mobile terminal. Here, the local area network refers to an internetwork in a specific physical place, such as a public net bar, a campus network, a housing district, and an office building, and the external network refers to the Internet or other local area networks. In this application, the mobile terminal takes an effect of routing and forwarding. For traffic flows sent by different devices in the local area network which the mobile terminal acts as an agent for, the phenomenon that different traffic flows are matched with the same packet filter may occur, so PCC cannot be performed on the device. Document "3rd Generation Partnership Project; Technical Specification Group Services and System Aspects; Evolution of Policy Control and Charging (Release 7)", Technical Report, 3GPP TR 23.803 V1.2.0, 2005-09, discloses general requirements for the PCC. It is particularly disclosed that the Gateway locates the set of PCC filters, corresponding to the destination IP address for the packet. According to a UE IP address and TFT based binding, proper binding at the PCRF is possible if the UE and the AF provide a common subset of parameters: the source of media (source IP address/network and/or source port/port range), which identifies the remote end of communication (assuming sending and receiving are symmetric); or the destination (destination port/port range), which identifies the UE end of communication; and the protocol number, if the same source and/or destination appears in more than one authorization. Document "3rd Generation Partnership Project; Technical Specification Group Services and System Aspects; Policy and charging control architecture (Release 9)", Technical Specification, 3GPP TS 23.203 V9.3.0, 2009-12, discloses general requirements of charging and policy control. There is disclosed a bearer binding being the association of the PCC rule and the QoS rule (if applicable) to an IP CAN bearer within that IP CAN session. This function resides in the Bearer Binding Function (BBF).

### SUMMARY OF THE INVENTION

The objectives of embodiments of the present invention are to provide a method for implementing policy and charging control and a gateway, so as to perform policy and charging control PCC on a device in the case that multiple devices are connected to a network by sharing a mobile terminal.
The invention is defined by the features of the independent claims.

An embodiment of the present invention provides a method for implementing policy and charging control, which includes:
receiving, by a gateway, an uplink packet forwarded by a mobile terminal and sent by a device located in a local area network which the mobile terminal acts as an agent for, the device performing data interaction with the gateway through a wireless access network, where after obtaining a traffic flow template TFT packet filter corresponding to an Internet Protocol IP address of the device in the uplink packet through matching, the mobile terminal forwards the uplink packet through a bearer corresponding to the TFT packet filter; and
obtaining, by the gateway, an uplink policy and charging control PCC packet filter corresponding to the IP address of the device in the uplink packet through matching, and performing policy and charging control PCC on the uplink packet according to an uplink PCC rule found by matching the uplink packet with the uplink PCC packet filter,
further comprising before receiving the uplink packet:
converting, by the gateway, the uplink PCC packet filter in the uplink PCC rule into a TFT packet filter; and
sending, by the gateway, a quality of service QoS parameter in each uplink PCC rule and the TFT packet filter to the mobile terminal, so that the mobile terminal establishes correspondence between a bearer corresponding to the QoS parameter and the TFT packet filter.

An embodiment of the present invention further provides a gateway, where the gateway includes:
a receiving module, configured to: receive an uplink packet forwarded by a mobile terminal and sent by a device located in a local area network which the mobile terminal acts as an agent for, where after obtaining a traffic flow template TFT packet filter corresponding to an Internet Protocol IP address of the device in the uplink packet through matching, the mobile terminal forwards the uplink packet through a bearer corresponding to the TFT packet filter; and/or receive a downlink packet sent by an external network and with a destination IP address being an IP address of a device in the local area network, the device performing data interaction with the gateway through a wireless access network;
a control module, configured to: obtain an uplink policy and charging control PCC packet filter corresponding to the IP address of the device in the uplink packet through matching, and perform policy and charging control PCC on the uplink packet according to an uplink PCC rule found by matching the uplink packet with the uplink PCC packet filter; and/or obtain a downlink PCC packet filter corresponding to the IP address of the device in the downlink packet through matching, and perform PCC on the downlink packet according to a downlink PCC rule corresponding to the downlink PCC packet filter;
a conversion module, configured to, before the receiving module receives the uplink packet forwarded by the mobile terminal, convert the uplink PCC packet filter in the uplink PCC rule into a TFT packet filter; and
a sending module, configured to deliver a QoS parameter in each uplink PCC rule and the TFT packet filter to the mobile terminal, so that the mobile terminal establishes correspondence between a bearer corresponding to the QoS parameter and the TFT packet filter.

In the method for implementing policy and charging control, the gateway, and the mobile terminal in the embodiments of the present invention, an IP address attribute of a device at a mobile terminal side is added in the TFT packet filter, so that when performing matching on the uplink packet through the TFT packet filter, the mobile terminal can obtain a QoS parameter corresponding to the device through matching, thereby satisfying QoS requirements of different devices. Meanwhile, when receiving the uplink packet forwarded by the mobile terminal, the GW matches a source IP address attribute in the uplink PCC packet filter with the IP address of the device, and then finds the corresponding uplink PCC rule, so as to perform PCC on the uplink packet; when receiving the downlink packet sent by the external network, the GW matches the destination IP address attribute in the downlink PCC packet filter with the IP address of the device that receives the downlink packet of the external network, thereby achieving the purpose of performing accurate PCC on the device in the local area network which the mobile terminal acts as an agent for.

### BRIEF DESCRIPTION OF THE DRAWINGS

FIG. 1 is a schematic networking diagram of existing PCC architecture;
FIG. 2 is a schematic flow chart of Embodiment 1 of a method for implementing policy and charging control according to an embodiment of the present invention;
FIG. 3 is a schematic networking diagram of performing packet access by sharing a mobile terminal according to an embodiment of the present invention;
FIG. 4 is a schematic flow chart of Embodiment 2 of a method for implementing policy and charging control according to an embodiment of the present invention;
FIG. 5 is a schematic flow chart of Embodiment 3 of a method for implementing policy and charging control according to an embodiment of the present invention;
FIG. 6 is a schematic flow chart of Embodiment 4 of a method for implementing policy and charging control according to an embodiment of the present invention;
FIG. 7 is a schematic flow chart of Embodiment 5 of a method for implementing policy and charging control according to an embodiment of the present invention;
FIG. 8 is a schematic structural diagram of a gateway according to an embodiment of the present invention; and
FIG. 9 is a schematic structural diagram of a mobile terminal according to an embodiment of the present invention.

### DETAILED DESCRIPTION OF THE EMBODIMENTS

In order to make the objectives, features and advantages of embodiments of the present invention more obvious and comprehensible, the embodiments of the present invention are further illustrated in detail in the following with reference to the accompanying drawings and specific implementation manners.

It is found, through research, that, a TFT packet filter of an existing TFT has an attribute of Remote Address and Subnet Mask, that is, an external network entity (external network entity) address and a subnet mask. Since in the prior art, it is considered that an initiator of a service request is a mobile terminal, an IP address of the mobile terminal is determined as a fixed IP address by default. However, in the case that multiple devices in a local area network are connected to an external network by sharing one mobile terminal, a traffic flow of an uplink packet sent by a device in the local area network cannot be bound to an appropriate bearer to ensure QoS required by the traffic flow. Therefore, PCC cannot be performed on an uplink packet sent by each device. In the embodiments of the present invention, a source IP address attribute in an uplink PCC packet filter is matched with an IP address of a device that is in a local area network and sends the uplink packet, and a destination IP address attribute in a downlink PCC packet filter is matched with an IP address of a device that is in a local area network and receives the uplink packet, then the purpose of performing accurate PCC on the device in the local area network is achieved.

### Embodiment 1

This embodiment provides a method for implementing policy and charging control. As shown in FIG. 2, the method includes the following steps.

S101: Receive an uplink packet forwarded by a mobile terminal and sent by a device located in a local area network which the mobile terminal acts as an agent for, where after obtaining a TFT packet filter corresponding to an IP address of the device in the uplink packet through matching, the mobile terminal forwards the uplink packet through a bearer corresponding to the TFT packet filter.

After the mobile terminal obtains the TFT packet filter through matching according to the IP address of the device, the uplink packet is bound to the bearer corresponding to the TFT packet filter and is forwarded to a GW.

In the embodiment of the present invention, an IP address attribute of a device at a mobile terminal side is added in a TFT packet filter (definitely, it may be implemented by extending another attribute or adding an attribute), and is used to match an IP address of the device that sends the uplink packet to the mobile terminal. Therefore, the external network can identify the device in the local area network according to the uplink packet forwarded by the mobile terminal. When the mobile terminal does not act as an agent for the local area network, the IP address attribute of the device at the mobile terminal side is used to match an IP address of the mobile terminal. Therefore, the solutions of the embodiment of the present invention can be well compatible with the existing scenario in which the mobile terminal does not act as an agent for the local area network.

In the embodiment of the present invention, the mobile terminal serves as an agent for connecting the device in the local area network to the network, and forwards, to the GW, the uplink packet sent by the device in the local area network.

Considering processing efficiency, the number of the packet filters is limited. Therefore, the IP address attribute of the device at the mobile terminal side in the TFT packet filter corresponds to a continuous address segment or a certain host address.

S102: Obtain an uplink PCC packet filter corresponding to the IP address of the device in the uplink packet through matching, and perform policy and charging control PCC on the uplink packet according to an uplink PCC rule corresponding to the uplink PCC packet filter.

Each PCC rule at least includes one PCC packet filter (Packet Filter), and a QoS parameter and a charging requirement for the PCC packet filter. The PCC rule is classified into an uplink PCC rule and a downlink PCC rule. The PCC packet filter is classified into an uplink PCC packet filter and a downlink PCC packet filter according to different attribute values. The PCC packet filter in the uplink PCC rule is the uplink PCC packet filter, and the PCC packet filter in the downlink PCC rule is the downlink PCC packet filter. Each PCC rule has a priority level. If one PCC packet filter corresponds to multiple PCC rules, it is considered that the unique PCC rule of the highest priority level corresponding to the PCC packet filter is valid. Therefore, once the PCC packet filter is obtained through matching, a corresponding rule is found.

In this embodiment, an IP address attribute of a device at a mobile terminal side is added in the TFT packet filter, so that the mobile terminal can obtain a TFT packet filter according to an Internet protocol IP address of the device through matching, and perform forwarding through a bearer corresponding to the TFT packet filter, thereby satisfying QoS requirements of different devices. Meanwhile, when receiving the uplink packet forwarded by the mobile terminal, the GW can perform accurate policy control and charging on the device according to the IP address of the device by matching a source IP address attribute in the uplink PCC packet filter with the IP address of the device, thereby achieving the purpose of performing PCC on multiple devices connected to the network by sharing the mobile terminal.

In another embodiment of the present invention, the following steps may be further included on the basis of Embodiment 1: receiving a downlink packet sent by an external network and with a destination IP address being an IP address of a device in a local area network; acquiring a downlink policy and charging control PCC packet filter matched with the IP address of the device in the downlink packet; and performing PCC on the downlink packet according to a downlink PCC rule corresponding to the downlink PCC packet filter.

When receiving the downlink packet sent by the external network and with a destination IP address being the IP address of the device, the GW needs to perform PCC on the downlink packet according to the downlink PCC rule corresponding to the downlink PCC packet filter matched with the downlink packet. For example, if in the downlink PCC rule corresponding to the IP address of the device, the device is prevented from viewing some web pages or using some services, corresponding service use requests from the device are prohibited.

In comparison with Embodiment 1, in this embodiment, the GW performs the PCC on the downlink packet sent to the device in the local area network. The PCC is performed on the uplink packet sent by the device and is performed on the downlink packet returned by the external network to the device, thereby achieving the purpose of performing accurate PCC on each device in the local area network which the mobile terminal acts as an agent for.

### Embodiment 2

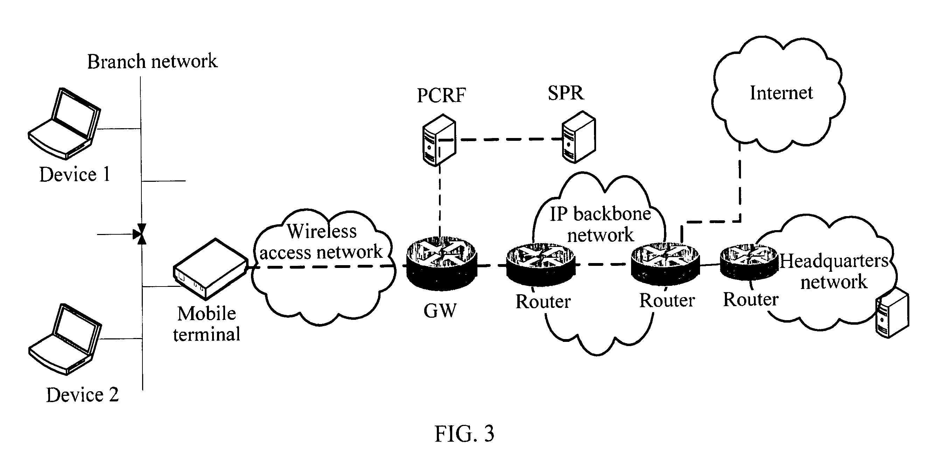

FIG. 3 is a schematic networking diagram of performing packet access by sharing a mobile terminal according to an embodiment of the present invention. As shown in FIG. 3, multiple devices (device 1, device 2 ...) in a local area network which a mobile terminal acts as an agent for perform data interaction with a GW through a wireless access network. The GW may perform data interaction with an external network (a headquarters network and the Internet) through an IP backbone network. The GW may obtain a PCC rule of the device in the local area network from a PCRF. The PCC rule on the PCRF may also be acquired from an SPR.

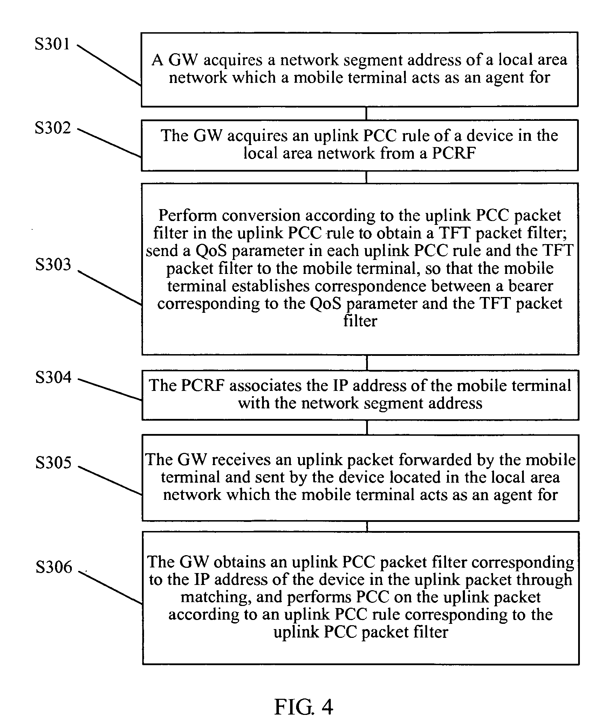

As shown in FIG. 4, a method for implementing policy and charging control of this embodiment includes the following steps.

S301: A GW acquires a network segment address of a local area network which a mobile terminal acts as an agent for.

When the mobile terminal accesses a network, a gateway GW may return an IP address used by the mobile terminal to the mobile terminal, where the IP address may be an IPv4 address or an IPv6 address prefix.

The GW may interact with a Radius (Remote Authentication Dial-In User Service, remote authentication dial-in user service) server to acquire the network segment address of the local area network which the mobile terminal acts as an agent for. The network segment address is subscribed to, in advance, by a customer organizing the local area network, and the network segment address together with an identifier of the mobile terminal is configured on the Radius server. When the mobile terminal is connected to a wireless network, after the Radius server receives the identifier (information such as a user name, a telephone number, or an IMSI number of the mobile terminal) of the mobile terminal sent by the GW, the Radius server may return the network segment address corresponding to the identifier, together with the IP address used by the mobile terminal, to the GW, and the GW delivers the IP address used by the mobile terminal to the mobile terminal.

The GW may also interact with the mobile terminal through a dynamic routing protocol to acquire the network segment address of the local area network which the mobile terminal acts as an agent for. Specifically, the network segment address of the local area network which the mobile terminal acts as an agent for is configured on the mobile terminal in advance, and the identifier (for example, an IMSI) of the mobile terminal and a local address pool for directly allocating an IP address to the mobile terminal are configured on the GW in advance. When the mobile terminal is connected to the wireless network, after the GW identifies the identifier of the mobile terminal, the GW directly allocates an IP address, which is used by the mobile terminal, in the local address pool and returns the IP address to the mobile terminal. Then, the GW uses another IP address in the same network segment as that of the IP address allocated to the mobile terminal for using, to run a dynamic routing protocol. The mobile terminal also use the IP address of the mobile terminal to run the same dynamic routing protocol, for example, OSPF (Open Shortest Path First, open shortest path first) or an RIP (Routing information Protocol, routing information protocol). Then, the GW and the mobile terminal each may find that they are neighbor nodes of each other, and can perform routing information interaction with each other.

According to the existing dynamic routing protocol, the information sent by the mobile terminal to the GW in a dynamic routing protocol packet is that the next hop address of an IP packet with a destination IP address in the range of the network segment address of the local area network which the mobile terminal acts as an agent for is the IP address used by the mobile terminal. The GW receives and parses the dynamic routing protocol packet, and can obtain the network segment address of the local area network which the mobile terminal acts as an agent for.

In the foregoing two situations, for an IPv4 network, the network segment address is IPv4 address segment information and IPv4 mask information; for an IPv6 network, the network segment address is IPv6 address prefix information.

S302: The GW acquires an uplink PCC rule of a device in the local area network from a PCRF.

The PCC rule managed on the PCRF may be dynamically generated according to service information in session information provided by an AF in combination with user subscription information and a local operator policy, and may also be pre-configured according to user subscription information.

In the PCC rule in the prior art, attributes (a source IP address attribute in an uplink PCC packet filter and a destination IP address attribute in a downlink PCC packet filter) corresponding to the IP address of the mobile terminal exist in a PCC packet filter, but an attribute corresponding to an IP address of the device in the local area network which the mobile terminal acts as an agent for does not exist in the PCC packet filter. Therefore, it is not applicable to the application situation in which the mobile terminal acts as an agent for the local area network.

In a PCC packet filter in the embodiment of the present invention, a source IP address attribute in an uplink PCC packet filter is used to match an IP address of a device that sends an uplink packet, and a destination IP address attribute in a downlink PCC packet filter is used to match an IP address of a device that receives a downlink packet from an external network, thereby achieving the purpose of performing accurate PCC on the device in the local area network which the mobile terminal acts as an agent for, which may definitely be implemented by extending another attribute or adding an attribute.

The acquiring, by the GW, the uplink PCC rule of the device in the local area network from the PCRF may be acquiring uplink PCC rules of all devices or a part of devices (for example, some devices are not configured with PCC rules) in the local area network. Moreover, the GW may also acquire a downlink PCC rule from the PCRF at the same time, so as to perform PCC when receiving a downlink packet subsequently.

The embodiment of the present invention provides two manners for acquiring, by the GW, the uplink PCC rule of the device in the local area network from the PCRF.
1) The GW sends the network segment address of the local area network to the PCRF; and the PCRF returns an uplink PCC rule corresponding to the network segment address to the GW.

In the prior art, the GW uploads, through Framed-IP-Address in a CC-Request message, an IPv4 address allocated to the mobile terminal to the PCRF or uploads, through Framed-IPv6-Prefix in a CC-Request message, an IPv6 address prefix allocated to the mobile terminal to the PCRF. A response message of the Request message carries a PCC rule of the mobile terminal.

In the embodiment of the present invention, an AVP (Attribute Value Pair, a pair of attribute and value) in the CC-Request message may be expanded, and a network segment address used by multiple devices for performing packet access by sharing the mobile terminal is carried through an extended cell.

For example, Framed-Subnet-IP-Address is added to describe IPv4 address segment information of the devices that perform packet access by sharing the mobile terminal, and Framed-Subnet-IP-Netmask is added to describe IPv4 mask information of the devices that perform packet access by sharing the mobile terminal. A type and a length of Framed-Subnet-IP-Address are the same as those of Framed-IP-Address, and a type and a length of Framed-Subnet-IP-Netmask are the same as those of Framed-IP-Netmask. For details, reference may be made to the definition in the RFC4005. Likewise, Framed-Subnet-IPv6-Prefix may be added to describe IPv6 address prefix information of the devices that perform packet access by sharing the mobile terminal. A type and a length of Framed-Subnet-IPv6-Prefix are the same as those of Framed-IPv6-Prefix. For details, reference may be made to the definition in the RFC4005.

The PCRF first finds an uplink PCC packet filter whose source IP address attribute corresponds to the network segment address, and then returns the uplink PCC packet filter to the GW. Alternatively, the PCRF may find the uplink PCC packet filter whose source IP address attribute corresponds to the network segment address and a downlink PCC packet filter whose destination IP address attribute corresponds to the network segment address, and then return the PCC rule corresponding to the uplink PCC packet filter and the PCC rule corresponding to the downlink packet filter to the GW, where the PCC rules include the PCC packet filters.
2) The GW sends an identifier (at least one piece of information such as a telephone number, an IMSI number, or an IP address allocated by the GW to the mobile terminal) of the mobile terminal in the uplink packet to the PCRF; the PCRF acquires, from an SPR, an uplink PCC rule of a device in the local area network which the mobile terminal corresponding to the identifier of the mobile terminal acts as an agent for; and the PCRF returns the uplink PCC rule to the GW.

Preferably, the GW sends an identifier (including a telephone number, an IMSI number, and an IP address allocated by the GW to the mobile terminal) of the mobile terminal in the uplink packet to the PCRF; the PCRF acquires, from an SPR, an uplink PCC rule of a device in the local area network which the mobile terminal corresponding to one of the telephone number, the IMSI number, and the IP address allocated by the GW to the mobile terminal in the identifier of the mobile terminal acts as an agent for; and the PCRF returns the uplink PCC rule to the GW.

The situation corresponding to this manner is that a PCC rule is not pre-configured on the PCRF, and the PCRF acquires, from the SPR, a pre-stored uplink PCC rule corresponding to the identifier of the mobile terminal according to the identifier of the mobile terminal sent by the GW.

In this manner, the CC-request message sent by the GW to the PCRF may be the same as that in the prior art. In both this manner and the prior art, the identifier of the mobile terminal is sent to the PCRF. Definitely, the CC-request message sent by the GW to the PCRF in this manner may be the same as that in the first manner, that is, the AVP in the CC-request message may be expanded. The CC-request message carries the identifier of the mobile terminal, and the network segment address used by multiple devices that perform packet access by sharing the mobile terminal may also be carried through the extended cell. When the PCC rule is not pre-configured on the PCRF, the PCRF performs processing according to the identifier of the mobile terminal carried in the CC-request message.

The PCRF first acquires, from the SPR, the uplink PCC rule of the device in the local area network which the mobile terminal corresponding to the identifier of the mobile terminal acts as an agent for, and then returns the uplink PCC rule to the GW. Alternatively, in this manner, the PCRF may also acquire, from the SPR, the uplink PCC rule and the downlink PCC rule of the device in the local area network which the mobile terminal corresponding to the identifier of the mobile terminal acts as an agent for, and then returns the uplink PCC rule and the downlink PCC rule to the GW. The PCC rule includes the PCC packet filter.

S303: Convert the uplink PCC packet filter in the uplink PCC rule into a TFT packet filter; send a QoS parameter in each uplink PCC rule and the TFT packet filter to the mobile terminal, so that the mobile terminal establishes correspondence between a bearer corresponding to the QoS parameter and the TFT packet filter.

After the GW obtains the PCC rule of the local area network in the foregoing two manners, the GW converts the uplink PCC packet filter in the uplink PCC rule into a TFT packet filter. Then, the QoS parameter in the uplink PCC rule and the TFT packet filter may be delivered by the GW to the mobile terminal through a GTP (GPRS Tunnel Protocol, GPRS tunnel protocol) message in a format of a QoS profile and a TFT. Specifically, the GW carries the QoS parameter and the TFT packet filter through the extended cell in a response message used for allocating an IP address to the mobile terminal. In a GPRS network, the GW is a GGSN (Gateway GPRS Supporting Node, gateway GPRS supporting node). The GGSN sends a Create PDP Context Response message as a response to an SGSN (Serving GPRS Supporting Node, serving GPRS supporting node), and finally notifies the mobile terminal of the message, where the message includes information about the QoS parameter of the device and the TFT packet filter obtained after the mobile terminal activates PDP Context once.

The QoS parameter and the TFT packet filter are both located in the message for the bearer, so after receiving the QoS parameter and the TFT packet filter, the mobile terminal may establish correspondence between the bearer and the TFT packet filter for convenience of subsequent use.

The TFT packet filter described above includes an IP address attribute of a device at a mobile terminal side, for example, Local Address and Subnet Mask, and a type and a length are the same as those of Remote Address and Subnet Mask in the packet filter in the prior art. A specific value of the IP address attribute of the device at the mobile terminal side is in a network segment identified by Framed-Subnet-IP-Address and Framed-Subnet-IP-Netmask, or by Framed-Subnet-IPv6-Prefix. The IP address attribute of the device at the mobile terminal side is used to match the IP address of the device that sends the packet.

Optionally, step S304 is further included. S304: The PCRF associates the IP address of the mobile terminal with the network segment address.

The acquiring, by the PCRF, the network segment address is implemented in two manners: i) sending, by the GW, the network segment address of the local area network to the PCRF at the same time when sending the identifier of the mobile terminal; ii) sending, by the SPR, the network segment address corresponding to the identifier of the mobile terminal to the PCRF at the same time when returning the PCC rule to the PCRF. The network segment address may be carried through the expanded cell.

When the PCC rules summarized under the identifier of the mobile terminal are changed, the PCC rule of each device of the local area network which the mobile terminal acts as an agent for needs to be refreshed. If the PCRF does not associate the IP address of the mobile terminal with the network segment address, the PCC rule of each device of the local area network which the mobile terminal acts as an agent for cannot be found for refreshing. Therefore, preferably, the PCRF associates the IP address of the mobile terminal with the network segment address. In this way, when the PCC rule is refreshed according to the identifier of the mobile terminal, the PCC rule related to the network segment address can be processed synchronously. For example, charging of the whole local area network may be summarized under the identifier of the mobile terminal. If arrears appear, policies in the PCC rules related to the network segment address all need to be modified as: preventing a packet from being sent to the external network.

Furthermore, the GW may also associate the IP address of the mobile terminal with the network segment address. The GW may also associate the IP address of the mobile terminal with the network segment address, in order that, a case in which when a network side sends a downlink packet to the device subsequently, the GW discards the downlink packet because the GW considers according to the IP address of the device that the device does not belong to the mobile terminal managed by the GW, can be prevented, thereby avoiding abnormal use of a service. Definitely, if the GW can confirm according to the IP address of the device that the device falls within the range managed by the GW, it is not required to associate the IP address of the mobile terminal with the network segment address.

In this embodiment, the main functions of the mobile terminal are session establishment and bearer establishment, so that each device in the local area network which the mobile terminal acts as an agent for use the session and the bearer established by the mobile terminal to perform service communication with the network side. After associating the IP address of the mobile terminal with the network segment address, the GW equally treats the IP address of the device and the IP address of the mobile terminal. Moreover, when the session is deleted, the PCC rule of each device in the network segment address associated with the IP address of the mobile terminal that establishes the session may be cleared away thoroughly, thereby releasing storage resources on the GW and ensuring the efficient operation of the GW.

Because before acquiring the PCC rule of each device in the local area network from the PCRF, the GW already obtains the network segment address of the local area network, the GW may associate the IP address of the mobile terminal with the network segment address of the device before sending a CC-request message to the PCRF.

S305: The GW receives an uplink packet forwarded by the mobile terminal and sent by the device located in the local area network which the mobile terminal acts as an agent for.

After obtaining a TFT packet filter corresponding to an IP address of a device in the uplink packet through matching, the mobile terminal forwards the uplink packet through a bearer corresponding to the TFT packet filter.

After the mobile terminal forwards, to the GW, the uplink packet sent by the device, the GW performs PCC on the uplink packet according to an uplink PCC rule corresponding to the device, for example, whether to allow passing, whether it is required to modify a field such as an IP address in the packet, and charging.

An IP address attribute of a device at a mobile terminal side is added in the TFT packet filter in the embodiment of the present invention and is used to match the IP address of the device that sends the uplink packet. When the mobile terminal does not act as an agent for the local area network but serves as a device that initiates the uplink packet, the IP address attribute of the device at the mobile terminal side is used to match the IP address of the mobile terminal.

The mobile terminal matches the uplink packet with the TFT packet filter, obtains the bearer corresponding to the TFT packet filter according to the correspondence that is between the bearer and the TFT packet filter and is stored on the mobile terminal, and binds the uplink packet to the bearer and forwards it to the GW.

The matching refers to determining that field information (for example, an IP packet header and each field of the TCP/UDP) of the acquired uplink packet and recorded traffic flow information (for example, corresponding attributes in the packet filter) are the same or each field value falls within a value range of each attribute in the TFT packet filter.

For example, in the uplink packet, a protocol type is 6 (that is, the TCP), a source port number is 1000, a destination port number is 1200, and a destination IP address is 201.2.2.1. The content of the attribute of Remote Address and Subnet Mask in a packet filter is {201.2.2.0 [255.255.255.0]} (before the square bracket is an IP address segment, and in the square bracket is a network mask), the content of the attribute of Protocol Number is 6 (indicating the TCP), a lower limit of the attribute of Local Port Range is 900, and an upper limit of the attribute of Local Port Range is 1100, and a value of the attribute of Remote Port Range is 1200. Because the destination IP address 201.2.2.1 in the uplink packet falls within a network segment range represented by the attribute of Remote Address and Subnet Mask, the source port number 1000 falls within the upper limit and lower limit ranges of the attribute of Local Port Range, and values of other fields in the uplink packet are the same as those of other corresponding attributes in the TFT packet filter, so the uplink packet is matched with the TFT packet filter. If the uplink packet is not matched with any existing TFT packet filter, in order to ensure the normal use of the service, the mobile terminal and the GW may bind the uplink packet to a default bearer.

It can be understood that, a source IP address of the device that performs packet access by sharing the mobile terminal should be an address in a network segment identified by Framed-Subnet-IP-Address and Framed-Subnet-IP-Netmask, or by Framed-Subnet-IPv6-Prefix.

S306: The GW obtains an uplink PCC packet filter corresponding to the IP address of the device in the uplink packet through matching, and performs PCC on the uplink packet according to an uplink PCC rule corresponding to the uplink PCC packet filter.

After receiving the uplink packet forwarded by the mobile terminal, the GW matches the uplink packet with the uplink PCC packet filter stored in the GW, to find the corresponding uplink PCC rule, and performs policy control and charging on the uplink packet, thereby implementing the PCC on the device.

Optionally, this embodiment further includes: receiving a downlink packet sent by an external network and with a destination IP address being an IP address of a device in the local area network; acquiring a downlink PCC packet filter matched with the IP address of the device in the downlink packet; and performing PCC on the downlink packet according to a downlink PCC rule corresponding to the downlink PCC packet filter.

The downlink PCC rule may be acquired at the same time when the uplink PCC rule is acquired, and may also be acquired by using the same method as that for acquiring the uplink PCC rule. For details, reference may be made to step 302.

In order to accurately perform the PCC on the devices that perform packet access by sharing the mobile terminal, in the PCC packet filter of the PCC rule, the source IP address attribute of the uplink PCC packet filter may be accurately matched with an IP address of a specific device and the destination IP address attribute of the downlink PCC packet filter may be accurately matched with an IP address of a specific device, as long as the value of the IP address is in the network segment identified by Framed-Subnet-IP-Address and Framed-Subnet-IP-Netmask, or by Framed-Subnet-IPv6-Prefix.

In the whole life cycle after network accessing, as long as the mobile terminal maintains TFT packet filter information in the TFT according to a signaling message, the mobile terminal can bind uplink packets matched with TFT packet filters to corresponding bearers, and delivers them to a GW side. As long as the GW maintains PCC packet filter information, the GW can match it with the IP packet of a device that performs packet access by sharing the mobile terminal, thereby implementing the PCC based on a traffic flow by using the process in the prior art.

In this embodiment, an IP address attribute of a device at a mobile terminal side is added in the TFT packet filter, so that when matching the uplink packet with the TFT packet filter, the mobile terminal can obtain a QoS parameter corresponding to the device through matching, thereby satisfying QoS requirements of different devices. Meanwhile, when receiving the uplink packet forwarded by the mobile terminal, the GW matches a source IP address attribute in the uplink PCC packet filter with the IP address of the device, and then finds the corresponding uplink PCC rule, so as to perform PCC on the uplink packet, thereby achieving the purpose of performing PCC on multiple devices connected to the network by sharing the mobile terminal.

### Embodiment 3

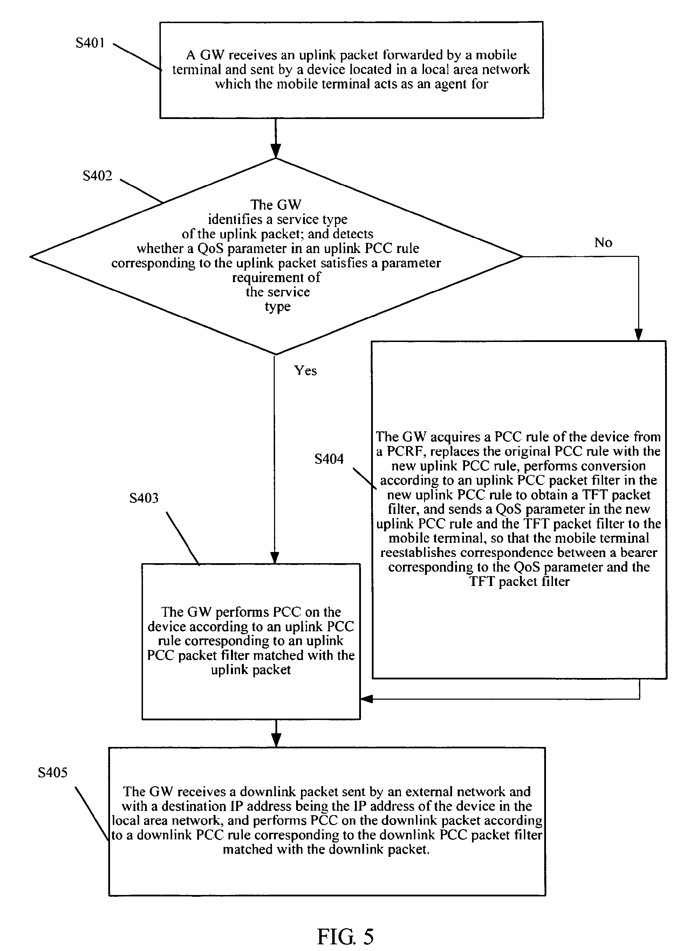

As shown in FIG. 5, a method for implementing policy and charging control provided in this embodiment includes the following steps.

S401: A GW receives an uplink packet forwarded by a mobile terminal and sent by a device located in a local area network which the mobile terminal acts as an agent for.

After obtaining a TFT packet filter corresponding to an IP address of a device in the uplink packet through matching, the mobile terminal forwards the uplink packet through a bearer corresponding to the TFT packet filter.

S402: The GW identifies a service type of the uplink packet; and if a QoS parameter in an uplink PCC rule corresponding to the uplink packet satisfies a parameter requirement of the service type, perform step S403. S403: The GW performs PCC on the device according to an uplink PCC rule corresponding to an uplink PCC packet filter matched with the uplink packet. If the QoS parameter in the uplink PCC rule corresponding to the uplink packet does not satisfy the parameter requirement of the service type, step S402a is further included before step S403. S402a: The GW acquires an uplink PCC rule of the device from a PCRF, replaces the original uplink PCC rule with the new uplink PCC rule, converts the uplink PCC packet filter in the uplink PCC rule into a TFT packet filter, and sends a QoS parameter in the new uplink PCC rule and the TFT packet filter to the mobile terminal, so that the mobile terminal reestablishes correspondence between a bearer corresponding to the QoS parameter and the TFT packet filter.

In this embodiment, the GW has a DPI (Deep Packet Inspection, deep packet inspection) function enabled to identify the service type of the received uplink packet and detect whether the QoS parameter in the uplink PCC rule corresponding to the uplink packet satisfies the QoS requirement of the service type.

Specifically, for example, a GGSN initiates a PDP context modification process to the mobile terminal and sends the QoS parameter of the device and the TFT packet filter to the mobile terminal. The information of the TFT packet filter also includes an IP address attribute of a device at a mobile terminal side matched with the IP address of the device described in Embodiment 2.

The acquiring, by the GW, the new uplink PCC rule of the device from the PCRF may be specifically: sending, by the GW, the IP address of the device to the PCRF; and returning, by the PCRF, the uplink PCC rule corresponding to the uplink PCC packet filter matched with the IP address of the device to the GW.

The GW has the DPI function, and can detect in real time whether the stored PCC rule is applicable to the uplink packet forwarded by the mobile terminal. If the stored PCC rule is inapplicable to the uplink packet, the GW reacquires a PCC rule, replaces the original PCC rule with the new PCC rule, converts the uplink PCC packet filter in the uplink PCC rule into a TFT packet filter, and delivers a QoS parameter in the new PCC rule and the TFT packet filter to the mobile terminal in a format of a QoS profile and a TFT, so that the mobile terminal can regenerate correspondence between a bear and the TFT packet filter according to the QoS parameter, the TFT packet filter, and the bearer associated with the QoS parameter, thereby providing more accurate QoS to the uplink packet.

After acquiring the new PCC rule, the GW may use the new PCC rule to perform PCC on the device.

In this embodiment, the GW may acquire the PCC rule of the device from the PCRF by sending a session modification request to the PCRF, where the session modification request may carry the IP address of the device; and then the PCRF delivers the PCC rule of the device to the GW through a session modification response.

In this embodiment, an IP address attribute of a device at a mobile terminal side is added in the TFT packet filter, so that when performing matching on the uplink packet through the TFT packet filter, the mobile terminal can obtain a QoS parameter corresponding to the device through matching, thereby satisfying QoS requirements of different devices. Meanwhile, when receiving the uplink packet forwarded by the mobile terminal, the GW matches a source IP address attribute in the uplink PCC packet filter with the IP address of the device, and then finds the corresponding uplink PCC rule, so as to perform PCC on the uplink packet, thereby achieving the purpose of performing PCC on multiple devices connected to the network by sharing the mobile terminal. The GW has the DPI function, and can detect in real time whether the stored PCC rule is applicable to the uplink packet forwarded by the mobile terminal. If the stored PCC rule is not applicable to the uplink packet forwarded by the mobile terminal, the GW reacquires a PCC rule, replaces the original PCC rule with the new PCC rule, converts the uplink PCC packet filter in the uplink PCC rule into a TFT packet filter, and delivers a QoS parameter in the new PCC rule and the TFT packet filter to the mobile terminal in a format of a QoS profile and a TFT, so that the mobile terminal updates correspondence between the bear and the TFT packet filter, thereby performing more accurate PCC on the device in the local area network which the mobile terminal acts as an agent for. Because the PCC can be performed on the multiple devices connected to the network by sharing the mobile terminal, the method of this embodiment is also applicable to the application scenario in which the device in the local area network is used as a server to provide a service for an external network.

### Embodiment 4

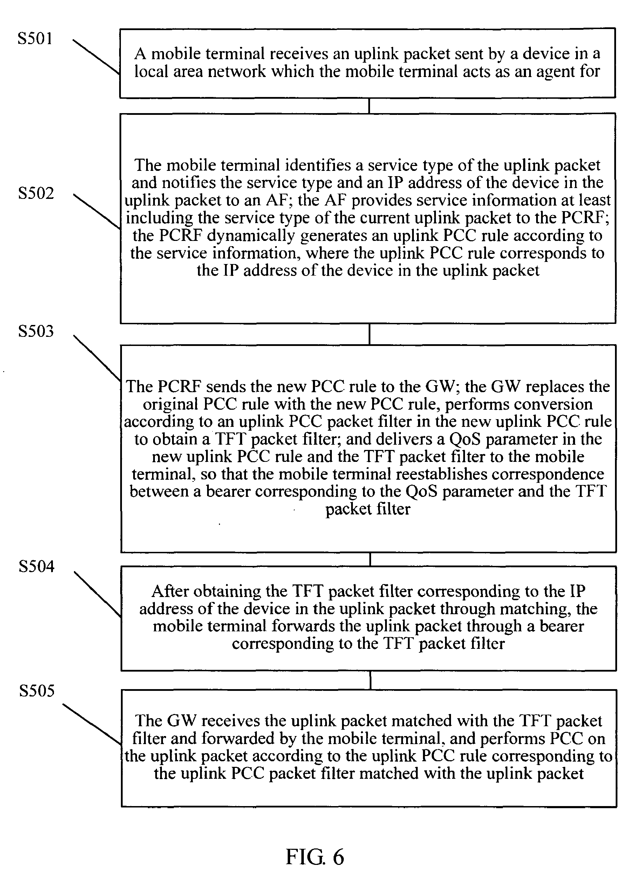

As shown in FIG. 6, a method for implementing policy and charging control provided in this embodiment includes the following steps.

S501: A mobile terminal receives an uplink packet sent by a device in a local area network which the mobile terminal acts as an agent for.

S502: The mobile terminal identifies a service type of the uplink packet and notifies the service type and an IP address of the device in the uplink packet to an AF; the AF provides service information at least including the service type of the current uplink packet and the IP address of the device in the uplink packet to the PCRF; the PCRF dynamically generates an uplink PCC rule according to the service information, where the uplink PCC rule corresponds to the IP address of the device in the uplink packet.

In this embodiment, the mobile terminal has a DPI function enabled to identify the service type of the uplink packet. The mobile terminal notifies the identified service type and the IP address of the device in the uplink packet to the AF; the AF provides service information of the current uplink packet and the IP address of the device in the uplink packet to the PCRF; the PCRF may further dynamically generate the PCC rule with reference to user subscription information and a local operator policy, where the uplink PCC rule corresponds to the IP address of the device in the uplink packet.

S503: The PCRF sends the new uplink PCC rule to the GW; the GW replaces the original uplink PCC rule with the new uplink PCC rule, converts the uplink PCC packet filter in the uplink PCC rule into a TFT packet filter; and delivers a QoS parameter in the new uplink PCC rule and the TFT packet filter to the mobile terminal, so that the mobile terminal reestablishes correspondence between a bearer corresponding to the QoS parameter and the TFT packet filter.

In this step, the PCRF actively delivers the newly generated PCC rule to the GW.

S504: After obtaining the TFT packet filter corresponding to the IP address of the device in the uplink packet through matching, the mobile terminal forwards the uplink packet through a bearer corresponding to the TFT packet filter.

S505: The GW receives the uplink packet matched with the TFT packet filter and forwarded by the mobile terminal, and performs PCC on the uplink packet according to the uplink PCC rule corresponding to the uplink PCC packet filter matched with the uplink packet.

After receiving the uplink packet sent by the device in the local area network which the mobile terminal acts as an agent for, the mobile terminal may buffer the packet according to the foregoing sequence, and after obtaining the latest QoS parameter and the TFT packet filter of the device from the GW, the mobile terminal performs the matching operation of the TFT packet filter; or the mobile terminal may perform matching and forwarding on the uplink packet according to default correspondence. Therefore, steps S504 and S505 are not in a specific sequence.

In this embodiment, an IP address attribute of a device at a mobile terminal side is added in the TFT packet filter, so that when performing matching on the uplink packet through the TFT packet filter, the mobile terminal can obtain a QoS parameter corresponding to the device through matching, thereby satisfying QoS requirements of different devices. Meanwhile, when receiving the uplink packet forwarded by the mobile terminal, the GW matches a source IP address attribute in the uplink PCC packet filter with the IP address of the device, and then finds the corresponding uplink PCC rule, so as to perform PCC on the uplink packet, thereby achieving the purpose of performing PCC on multiple devices connected to the network by sharing the mobile terminal. The mobile terminal has the DPI function, can identify the service type of the uplink packet sent by the device in the local area network which the mobile terminal acts as an agent for, and notifies the AF of the service type, to trigger a dynamical refreshing process of the PCC rule. The GW acquires a QoS parameter and a PCC packet filter that are corresponding to a traffic flow, and performs more accurate PCC on the uplink packet. Because the PCC can be performed on the multiple devices connected to the network by sharing the mobile terminal, the method of this embodiment is also applicable to the application scenario in which the device in the local area network is used as a server to provide a service for an external network.

Many contents in Embodiment 3 and Embodiment 4 are similar to those in Embodiment 2, so the description is simple. For details, reference may be made to the relevant contents of Embodiment 2.

### Embodiment 5

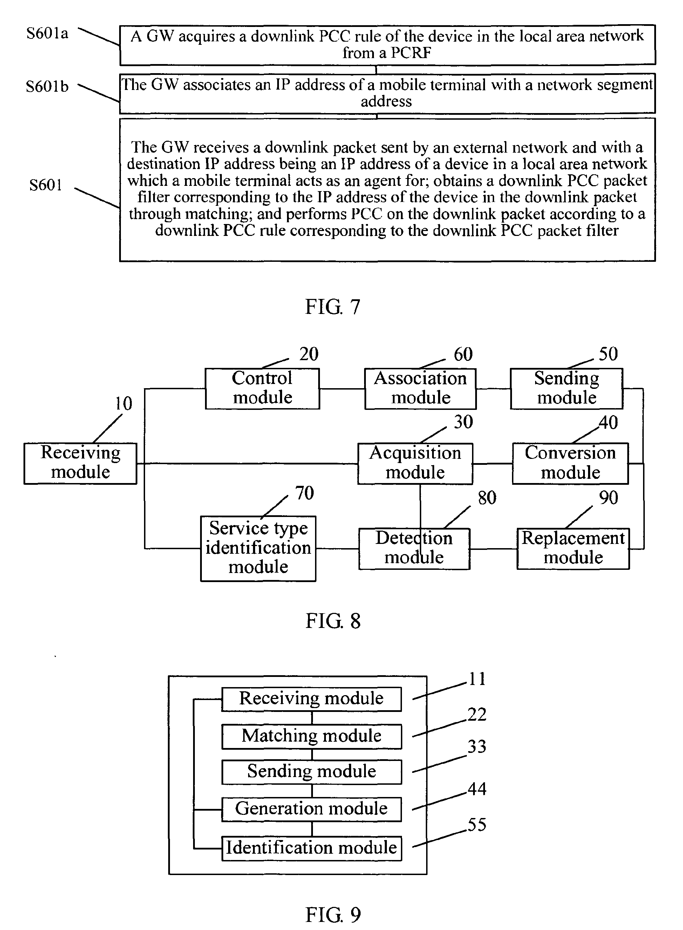

As shown in FIG. 7, a method for implementing policy and charging control provided in this embodiment includes the following steps.

S601: A GW receives a downlink packet sent by an external network and with a destination IP address being an IP address of a device in a local area network which a mobile terminal acts as an agent for; obtains a downlink PCC packet filter corresponding to the IP address of the device in the downlink packet through matching; and performs PCC on the downlink packet according to a downlink PCC rule corresponding to the downlink PCC packet filter.

Before receiving the downlink packet sent by the external network, the method further includes step S601a: The GW acquires a downlink PCC rule of the device in the local area network from a PCRF.

Optionally, step S601b is further included before S601. S601b: The GW associates an IP address of the mobile terminal with a network segment address.

The GW associates the IP address of the mobile terminal with the network segment address, in order that, a case in which when a network side sends a downlink packet to the device subsequently, the GW discards the downlink packet because the GW considers according to the IP address of the device that the device does not belong to the mobile terminal managed by the GW, can be prevented, thereby avoiding abnormal use of a service. Definitely, if the GW can confirm according to the IP address of the device that the device falls within the range managed by the GW, it is not required to associate the IP address of the mobile terminal with the network segment address.

In this embodiment, the main functions of the mobile terminal are session establishment and bearer establishment, so that multiple devices in the local area network which the mobile terminal acts as an agent for use the session and the bearer established by the mobile terminal to perform service communication with the network side. After associating the IP address of the mobile terminal with the network segment address, the GW equally treats the IP address of the device and the IP address of the mobile terminal. Moreover, when the session is deleted, the PCC rules of the devices in the network segment address associated with the IP address of the mobile terminal that establishes the session may be cleared away thoroughly, thereby releasing storage resources on the GW and ensuring the efficient operation of the GW.

Because before acquiring the PCC rules of the devices in the local area network from the PCRF, the GW already obtains the network segment address of the local area network, the GW may associate the IP address of the mobile terminal with the network segment address of the device before sending a CC-request message to the PCRF.

Optionally, the method may further include: associating, by the PCRF, the IP address of the mobile terminal with the network segment address. The PCRF associates the IP address of the mobile terminal with the network segment address. When the PCC rule is refreshed according to an identifier of the mobile terminal, the PCC rule related to the network segment address can be processed synchronously. For example, control rules for the local area network are summarized under the identifier of the mobile terminal. If a rule corresponding to the identifier of the mobile terminal is that use of instant communications software is prohibited, policies in the downlink PCC rules related to the network segment address are all modified to that the downlink packet of the external network is prohibited from passing, for convenience of refreshing and managing the downlink PCC rule.

The acquiring the downlink PCC rule of the device in the local area network from the PCRF may be implemented in the following two manners:
1) sending, by the GW, the network segment address of the local area network to the PCRF; and returning, by the PCRF, a downlink PCC rule corresponding to the network segment address to the GW; and
2) sending, by the GW, the identifier of the mobile terminal to the PCRF; acquiring, by the PCRF from the SPR, a downlink PCC rule of the device in the local area network which the mobile terminal corresponding to the identifier of the mobile terminal acts as an agent for; and returning, by the PCRF, the downlink PCC rule to the GW.

The manner may further include: acquiring, by the PCRF, the network segment address of the local area network from the SPR; and associating, by the PCRF, an IP address of the mobile terminal with the network segment address.

The GW may acquire the downlink PCC rule at the same time when the uplink PCC rule is acquired in Embodiment 2, or at the same time when the uplink PCC rule is acquired in Embodiment 3 or Embodiment 4.

Before step S601, in the case that the GW has a DPI function enabled, the method may further include: identifying, by the GW, a service type of the downlink packet; if a QoS parameter in the downlink PCC rule corresponding to the downlink packet does not satisfy a parameter requirement of the service type, acquiring a new downlink PCC rule of the device from the PCRF; and replacing the original downlink PCC rule with the new downlink PCC rule.

With reference to the contents disclosed in Embodiment 2, Embodiment 3, and Embodiment 4, persons skilled in the art can easily combine the technical solutions in these embodiments with the solutions in Embodiment 5, to derive more solutions for performing PCC on the downlink packet, which are not listed one by one in the embodiments of the present invention.

The method for implementing policy and charging control of this embodiment is applicable to a response downlink packet returned by a network side according to the uplink packet of the device in the local area network, and is also applicable to a downlink packet (for example, an advertisement, an notification, or the like) actively broadcast by a network side to each device at a mobile terminal side.

In a PCC packet filter in this embodiment, a destination IP address attribute in a downlink PCC packet filter is used to match an IP address of a device that receives a downlink packet of an external network, thereby achieving the purpose of performing accurate PCC on a device in a local area network which a mobile terminal acts as an agent for.

### Embodiment 6

An embodiment of the present invention further provides a gateway. As shown in FIG. 8, the gateway includes:
a receiving module 10, configured to: receive an uplink packet forwarded by a mobile terminal and sent by a device located in a local area network which the mobile terminal acts as an agent for, where after obtaining a TFT packet filter corresponding to an IP address of the device in the uplink packet through matching, the mobile terminal forwards the uplink packet through a bearer corresponding to the TFT packet filter; and
a control module 20, configured to: obtain an uplink PCC packet filter corresponding to the IP address of the device in the uplink packet through matching, and perform PCC on the uplink packet according to an uplink PCC rule corresponding to the uplink PCC packet filter.

Preferably, the receiving module 10 is further configured to receive a downlink packet sent by an external network and with a destination IP address being the IP address of the device in the local area network.

The control module 20 is further configured to: obtain a downlink PCC packet filter corresponding to an IP address of the device in the downlink packet through matching, and perform PCC on the downlink packet according to a downlink PCC rule corresponding to the downlink PCC packet filter.

The gateway may further include:
an acquisition module 30, configured to: before the receiving module 10 receives the packet forwarded by the mobile terminal, acquire an uplink PCC rule and/or a downlink PCC rule of the device in the local area network from a PCRF;
a conversion module 40, configured to convert the uplink PCC packet filter in the uplink PCC rule into a TFT packet filter; and
a sending module 50, configured to deliver a QoS parameter in each uplink PCC rule and the TFT packet filter to the mobile terminal, so that the mobile terminal establishes correspondence between a bearer corresponding to the QoS parameter and the TFT packet filter.

The acquisition module 30 may be further configured to acquire a network segment address of the local area network. The acquisition module 30 may include: a sending unit, configured to send the network segment address of the local area network to the PCRF; and a receiving unit, configured to receive a PCC rule in the network segment address returned by the PCRF.

The gateway may further include an association module 60, configured to associate an IP address of the mobile terminal with the network segment address.

The gateway may further include:
a service type identification module 70, configured to identify a service type of the uplink packet or the downlink packet;
a detection module 80, configured to: detect whether a QoS parameter in the uplink PCC rule corresponding to the uplink packet satisfies a parameter requirement of the service type, and if a result of the detection is negative, invoke the acquisition module 30 to acquire a new uplink PCC rule of the device from the PCRF; or detect whether a QoS parameter in the downlink PCC rule corresponding to the downlink packet satisfies a parameter requirement of the service type, and if a result of the detection is negative, invoke the acquisition module to acquire a new downlink PCC rule of the device from the PCRF; and
a replacement module 90, configured to replace the original uplink PCC rule with the new uplink PCC rule and replace the original downlink PCC rule with the new downlink PCC rule. After the conversion module 40 convert the uplink PCC packet filter in the uplink PCC rule into a TFT packet filter; the replacement module 90 may be further configured to invoke the sending module 50 to deliver a QoS parameter in the new uplink PCC rule and the TFT packet filter to the mobile terminal in a format of a QoS profile and a TFT, so that the mobile terminal reestablishes correspondence between a bearer corresponding to the QoS parameter and the TFT packet filter.

In this embodiment, an IP address attribute at a mobile terminal side is added in the TFT packet filter, so that the gateway of this embodiment can perform accurate policy control and charging on the device according to the IP address of the device, thereby achieving the purpose of performing the PCC on multiple devices connected to a network by sharing the mobile terminal. Moreover, the gateway of this embodiment can identify the service type of the uplink packet, determine whether the bearer used by the service type satisfies a QoS requirement, and if the bearer used by the service type does not satisfy the QoS requirement, a PCC rule of the device is reacquired, thereby implementing more accurate PCC on the device and the packet.

### Embodiment 7

An embodiment of the present invention further provides a mobile terminal. As shown in FIG. 9, the mobile terminal includes:
a receiving module 11, configured to receive an uplink packet sent by a device in a local area network which the mobile terminal acts as an agent for;
a matching module 22, configured to obtain a traffic flow template TFT packet filter corresponding to an Internet Protocol IP address of the device in the uplink packet through matching; and
a sending module 33, configured to forward, to a gateway, the uplink packet through a bearer corresponding to the TFT packet filter.

Preferably, the sending module 11 is further configured to: receive a QoS parameter and a TFT packet filter delivered by a gateway. The mobile terminal further includes a generation module 44, configured to establish correspondence between a bearer corresponding to the QoS parameter and the TFT packet filter.

More preferably, the mobile terminal further includes an identification module 55, configured to identify a service type of the uplink packet. The sending module 33 is further configured to notify the service type and the Internet Protocol IP address of the device in the uplink packet to an application function AF.

In this embodiment, an IP address attribute at a mobile terminal side is added in the TFT packet filter, so that when performing matching on the uplink packet through the TFT packet filter, the mobile terminal of this embodiment can obtain a QoS parameter corresponding to the device through matching, thereby satisfying QoS requirements of different devices. Meanwhile, the mobile terminal can identify the service type of the uplink packet, and dynamically acquire the QoS parameter corresponding to the device and the TFT packet filter corresponding to the device from the GW, thereby providing more accurate QoS to the uplink packet sent by the device.

Persons of ordinary skill in the art should understand that all or a part of the steps of the methods in the foregoing embodiments may be implemented by a program instructing relevant hardware. The program may be stored in a computer readable storage medium. When the program is run, the following steps are performed: receiving an uplink packet forwarded by a mobile terminal and sent by a device in a local area network which the mobile terminal acts as an agent for, where after obtaining a TFT packet filter corresponding to an IP address of the device in the uplink packet through matching, the mobile terminal forwards the uplink packet through a bearer corresponding to the TFT packet filter; obtaining an uplink PCC packet filter corresponding to the IP address of the device in the uplink packet through matching, and performing PCC on the uplink packet according to an uplink PCC rule corresponding to the uplink PCC packet filter. The storage medium may be a ROM/RAM, a magnetic disk, an optical disk, or the like.

It should be noted that the relational terms herein, such as first and second, are used only to differentiate an entity or operation from another entity or operation, and do not require or imply any actual relationship or sequence between these entities or operations. Moreover, the term "include", "comprise", or any variation thereof is intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. If no more limitations are imposed, an element limited by "including one ..." means that other same elements may also exist in the process, method, object, or device that includes the element.

## Claims

1. A method for implementing policy and charging control, comprising:
receiving (S101, S305), by a gateway, an uplink packet forwarded by a mobile terminal and sent by a device located in a local area network which the mobile terminal acts as an agent for, the device performing data interaction with the gateway through a wireless access network, wherein after obtaining a traffic flow template TFT packet filter corresponding to an Internet Protocol IP address of the device in the uplink packet through matching, the mobile terminal forwards the uplink packet through a bearer corresponding to the TFT packet filter; and
obtaining (S102, S306), by the gateway, an uplink policy and charging control PCC packet filter corresponding to the IP address of the device in the uplink packet through matching, and performing policy and charging control PCC on the uplink packet according to an uplink PCC rule found by matching the uplink packet with the uplink PCC packet filter,
further comprising before receiving (S101, S305) the uplink packet:
converting (S303), by the gateway, the uplink PCC packet filter in the uplink PCC rule into a TFT packet filter; and
sending (S303), by the gateway, a quality of service QoS parameter in each uplink PCC rule and the TFT packet filter to the mobile terminal, so that the mobile terminal establishes correspondence between a bearer corresponding to the QoS parameter and the TFT packet filter.

2. The method according to claim 1, wherein before the receiving the packet forwarded by the mobile terminal, the method further comprises:
acquiring (S302) an uplink PCC rule of the device in the local area network from a policy and charging rule function PCRF.

3. The method according to claim 2, wherein the acquiring the uplink PCC rule of the device in the local area network from the PCRF is specifically:
sending, by the gateway GW, a network segment address of the local area network to the PCRF; and
returning, by the PCRF, an uplink PCC rule corresponding to the network segment address to the GW.

4. The method according to claim 2, wherein the acquiring the uplink PCC rule of the device in the local area network from the PCRF is specifically:
sending, by the gateway GW, an identifier of the mobile terminal in the uplink packet to the PCRF;
acquiring, by the PCRF from a subscription profile repository SPR, the uplink PCC rule of the device in the local area network which the mobile terminal corresponding to the identifier of the mobile terminal acts as an agent for; and
returning, by the PCRF, the uplink PCC rule to the GW.

5. The method according to claim 4, further comprising:
acquiring, by the PCRF, a network segment address of the local area network from the SPR; and
associating (S304), by the PCRF, an IP address of the mobile terminal with the network segment address.

6. The method according to claim 1, wherein after the receiving (S101) the uplink packet forwarded by the mobile terminal, the method further comprises:
identifying a service type of the uplink packet;
acquiring a new uplink PCC rule of the device from a policy and charging rule function PCRF, if a QoS parameter in the uplink PCC rule corresponding to the uplink packet does not satisfy a parameter requirement of the service type; and
replacing the uplink PCC rule with the new uplink PCC rule.

7. The method according to claim 1, wherein before matching, by the mobile terminal, the uplink packet with the TFT packet filter, the method further comprises:
identifying (S502), by the mobile terminal, a service type of the uplink packet and notifying the service type and the IP address of the device in the uplink packet to an application function AF; providing, by the AF, the IP address of the device in the uplink packet and service information that at least comprises the service type of the current uplink packet to a policy and charging rule function PCRF; generating, by the PCRF, an uplink PCC rule, wherein the uplink PCC rule corresponds to the IP address of the device in the uplink packet; and sending, by the PCRF, the uplink PCC rule to a gateway GW.

8. The method according to claim 1, further comprising:
receiving a downlink packet sent by an external network and with a destination IP address being the IP address of the device in the local area network; and
acquiring a downlink policy and charging control PCC packet filter matched with an IP address of a device in the downlink packet, and performing PCC on the downlink packet according to a downlink PCC rule corresponding to the downlink PCC packet filter.

9. A gateway, comprising:
a receiving module (10), configured to: receive an uplink packet forwarded by a mobile terminal and sent by a device located in a local area network which the mobile terminal acts as an agent for, wherein after obtaining a traffic flow template TFT packet filter corresponding to an Internet Protocol IP address of the device in the uplink packet through matching, the mobile terminal forwards the uplink packet through a bearer corresponding to the TFT packet filter; and/or receive a downlink packet sent by an external network and with a destination IP address being an IP address of a device in a local area network, the device performing data interaction with the gateway through a wireless access network;
a control module (20), configured to: obtain an uplink policy and charging control PCC packet filter corresponding to the IP address of the device in the uplink packet through matching, and perform policy and charging control PCC on the uplink packet according to an uplink PCC rule found by matching the uplink packet with the uplink PCC packet filter; and/or obtain a downlink PCC packet filter corresponding to the IP address of the device in the downlink packet through matching, and perform PCC on the downlink packet according to a downlink PCC rule corresponding to the downlink PCC packet filter;
a conversion module (40), configured to, before the receiving module (10) receives the uplink packet forwarded by the mobile terminal, convert the uplink PCC packet filter in the uplink PCC rule into a TFT packet filter; and
a sending module (50), configured to deliver a QoS parameter in each uplink PCC rule and the TFT packet filter to the mobile terminal, so that the mobile terminal establishes correspondence between a bearer corresponding to the QoS parameter and the TFT packet filter.

10. The gateway according to claim 9, further comprising:
an acquisition module (30), configured to: before the receiving module (10) receives the packet forwarded by the mobile terminal, acquire an uplink PCC rule and/or a downlink PCC rule of the device in the local area network from a policy and charging rule function PCRF.

11. The gateway according to claim 9, further comprising:
a service type identification module (70), configured to identify a service type of the uplink packet or the downlink packet;
a detection module (80), configured to: detect whether a QoS parameter in the uplink PCC rule corresponding to the uplink packet satisfies a parameter requirement of the service type, and if a result of the detection is negative, invoke the acquisition module (30) to acquire a new uplink PCC rule of the device from a PCRF; or detect whether a QoS parameter in the downlink PCC rule corresponding to the downlink packet satisfies a parameter requirement of the service type, and if a result of the detection is negative, invoke the acquisition module (30) to acquire a new downlink PCC rule of the device from a PCRF; and
a replacement module (90), configured to replace the uplink PCC rule with the new uplink PCC rule, or replace the downlink PCC rule with the new downlink PCC rule.

## Patentansprüche

1. Verfahren zum Implementieren einer Richtlinien- und Gebührenberechnungssteuerung, das Folgendes umfasst:
Empfangen (S101, S305) durch ein Gateway eines Aufwärtsstreckenpakets, das durch ein mobiles Endgerät weitergeleitet wird und durch eine Vorrichtung gesendet wird, die sich in einem lokalen Netz befindet, für das das mobile Endgerät als ein Agent funktioniert, wobei die Vorrichtung Dateninteraktion mit dem Gateway über ein drahtloses Zugangsnetz ausführt, wobei das mobile Endgerät nach dem Erhalten eines Verkehrsflussvorlage-Paketfilters, TFT-Paketfilters, das einer Internetprotokoll-Adresse, IP-Adresse, der Vorrichtung in dem Aufwärtsstreckenpaket entspricht, durch Abgleichen, das Aufwärtsstreckenpaket über einen Träger, der dem TFT-Paketfilter entspricht, weiterleitet; und
Erhalten (S102, S306) durch das Gateway eines Aufwärtsstrecken-Richtlinien- und Gebührenberechnungssteuerungs-Paketfilters, Aufwärtsstrecken-PCC-Paketfilters, das der IP-Adresse der Vorrichtung in dem Aufwärtsstreckenpaket entspricht, durch Abgleichen und Ausführen von Richtlinien- und Gebührenberechnungssteuerung, PCC, auf dem Aufwärtsstreckenpaket gemäß einer Aufwärtsstrecken-PCC-Regel, die durch Abgleichen des Aufwärtsstreckenpakets mit dem Aufwärtsstrecken-PCC-Paketfilter gefunden wird,
wobei das Verfahren vor dem Empfangen (S101, S305) des Aufwärtsstreckenpakets Folgendes umfasst:
Umsetzen (S303) durch das Gateway des Aufwärtsstrecken-PCC-Paketfilters in der Aufwärtsstrecken-PCC-Regel in ein TFT-Paketfilter; und
Senden (S303) durch das Gateway eines Dienstgüte-Parameters, QoS-Parameters, in jeder Aufwärtsstrecken-PCC-Regel und des TFT-Paketfilters zu dem mobilen Endgerät, so dass das mobile Endgerät eine Zuordnung zwischen einem Träger, der dem QoS-Parameter entspricht, und dem TFT-Paketfilter aufbaut.

2. Verfahren nach Anspruch 1, wobei das Verfahren vor dem Empfangen des Pakets, das durch das mobile Endgerät weitergeleitet wird, ferner Folgendes umfasst:
Erfassen (S302) einer Aufwärtsstrecken-PCC-Regel der Vorrichtung in dem lokalen Netz aus einer Richtlinien- und Gebührenberechnungsregelfunktion, PCRF.

3. Verfahren nach Anspruch 2, wobei das Erfassen der Aufwärtsstrecken-PCC-Regel der Vorrichtung in dem lokalen Netz aus der PCRF insbesondere Folgendes ist:
Senden durch das Gateway, GW, einer Netzsegmentadresse des lokalen Netzes zu der PCRF; und
Zurückgeben durch die PCRF einer Aufwärtsstrecken-PCC-Regel, die der Netzsegmentadresse entspricht, zu dem GW.

4. Verfahren nach Anspruch 2, wobei das Erfassen der Aufwärtsstrecken-PCC-Regel der Vorrichtung in dem lokalen Netz aus der PCRF insbesondere Folgendes ist:
Senden durch das Gateway, GW, einer Kennung des mobilen Endgeräts in dem Aufwärtsstreckenpaket zu der PCRF;
Erfassen durch die PCRF aus einer Abonnementsprofilablage, SPR, der Aufwärtsstrecken-PCC-Regel der Vorrichtung in dem lokalen Netz, für das das mobile Endgerät, das der Kennung des mobilen Endgeräts entspricht, als Agent funktioniert; und
Zurückgeben durch die PCRF der Aufwärtsstrecken-PCC-Regel zu dem GW.

5. Verfahren nach Anspruch 4, das ferner Folgendes umfasst:
Erfassen durch die PCRF einer Netzsegmentadresse des lokalen Netzes aus der SPR; und
Zuordnen (S304) durch die PCRF einer IP-Adresse des mobilen Endgeräts zu der Netzsegmentadresse.

6. Verfahren nach Anspruch 1, wobei das Verfahren nach dem Empfangen (S101) des Aufwärtsstreckenpakets, das durch das mobile Endgerät weitergeleitet wird, ferner Folgendes umfasst:
Identifizieren eines Diensttyps des Aufwärtsstreckenpakets;
Erfassen einer neuen Aufwärtsstrecken-PCC-Regel der Vorrichtung aus einer Richtlinien- und Gebührenberechnungsregelfunktion, PCRF, falls ein QoS-Parameter in der Aufwärtsstrecken-PCC-Regel, die dem Aufwärtsstreckenpaket entspricht, eine Parameteranforderung des Diensttyps nicht erfüllt; und
Ersetzen der Aufwärtsstrecken-PCC-Regel durch die neue Aufwärtsstrecken-PCC-Regel.

7. Verfahren nach Anspruch 1, wobei das Verfahren vor dem Abgleichen durch das mobile Endgerät des Aufwärtsstreckenpakets mit dem TFT-Paketfilter ferner Folgendes umfasst:
Identifizieren (S502) durch das mobile Endgerät eines Diensttyps des Aufwärtsstreckenpakets und Melden des Diensttyps und der IP-Adresse der Vorrichtung in dem Aufwärtsstreckenpaket an eine Anwendungsfunktion, AF; Bereitstellen durch die AF der IP-Adresse der Vorrichtung in dem Aufwärtsstreckenpaket und von Dienstinformationen, die wenigstens den Diensttyp des aktuellen Aufwärtsstreckenpakets umfassen, für eine Richtlinien- und Gebührenberechnungsregelfunktion, PCRF; Erzeugen durch die PCRF einer Aufwärtsstrecken-PCC-Regel, wobei die Aufwärtsstrecken-PCC-Regel der IP-Adresse der Vorrichtung in dem Aufwärtsstreckenpaket entspricht; und Senden durch die PCRF der Aufwärtsstrecken-PCC-Regel zu einem Gateway, GW.

8. Verfahren nach Anspruch 1, das ferner Folgendes umfasst:
Empfangen eines Abwärtsstreckenpakets, das durch ein externes Netz und mit einer Ziel-IP-Adresse, die die IP-Adresse der Vorrichtung in dem lokalen Netz ist, gesendet wird; und
Erfassen eines Abwärtsstrecken-Richtlinien- und Gebührenberechnungssteuerungs-Paketfilters, Abwärtsstrecken-PCC-Paketfilters, das mit einer IP-Adresse der Vorrichtung in dem Abwärtsstreckenpaket übereinstimmt, und Ausführen von PCC auf dem Abwärtsstreckenpaket gemäß einer Abwärtsstrecken-PCC-Regel, die dem Abwärtsstrecken-PCC-Paketfilter entspricht.

9. Gateway, das Folgendes umfasst:
ein Empfangsmodul (10), das konfiguriert ist: ein Aufwärtsstreckenpaket zu empfangen, das durch ein mobiles Endgerät weitergeleitet wird und durch eine Vorrichtung gesendet wird, die sich in einem lokalen Netz befindet, für das das mobile Endgerät als ein Agent funktioniert, wobei das mobile Endgerät nach dem Erhalten eines Verkehrsflussvorlage-Paketfilters, TFT-Paketfilters, das einer Internetprotokoll-Adresse, IP-Adresse, der Vorrichtung in dem Aufwärtsstreckenpaket entspricht, durch Abgleichen, das Aufwärtsstreckenpaket über einen Träger, der dem TFT-Paketfilter entspricht, weiterleitet; und/oder ein Abwärtsstreckenpaket zu empfangen, das durch ein externes Netz und mit einer Ziel-IP-Adresse, die eine IP-Adresse einer Vorrichtung in einem lokalen Netz ist, gesendet wird, wobei die Vorrichtung Dateninteraktion mit dem Gateway über ein drahtloses Zugangsnetz ausführt;
ein Steuermodul (20), das konfiguriert ist: ein Aufwärtsstrecken-Richtlinien- und Gebührenberechnungssteuerungs-Paketfilter, Aufwärtsstrecken-PCC-Paketfilter, das der IP-Adresse der Vorrichtung in dem Aufwärtsstreckenpaket entspricht, durch Abgleichen zu erhalten und Richtlinien- und Gebührenberechnungssteuerung, PCC, auf dem Aufwärtsstreckenpaket gemäß einer Aufwärtsstrecken-PCC-Regel, die durch Abgleichen des Aufwärtsstreckenpakets mit dem Aufwärtsstrecken-PCC-Paketfilter gefunden wird, auszuführen; und/oder ein Abwärtsstrecken-PCC-Paketfilter, das der IP-Adresse der Vorrichtung in dem Abwärtsstreckenpaket entspricht, durch Abgleichen zu erhalten und PCC auf dem Abwärtsstreckenpaket gemäß einer Abwärtsstrecken-PCC-Regel, die dem Abwärtsstrecken-PCC-Paketfilter entspricht, auszuführen;
ein Umsetzungsmodul (40), das konfiguriert ist, bevor das Empfangsmodul (10) das Aufwärtsstreckenpaket empfängt, das durch das mobile Endgerät weitergeleitet wird, das Aufwärtsstrecken-PCC-Paketfilter in der Aufwärtsstrecken-PCC-Regel in ein TFT-Paketfilter umzusetzen; und
ein Sendemodul (50), das konfiguriert ist, einen QoS-Parameter in jeder Aufwärtsstrecken-PCC-Regel und das TFT-Paketfilter zu dem mobilen Endgerät zu senden, so dass das mobile Endgerät eine Zuordnung zwischen einem Träger, der dem QoS-Parameter entspricht, und dem TFT-Paketfilter aufbaut.

10. Gateway nach Anspruch 9, das ferner Folgendes umfasst:
ein Erfassungsmodul (30), das konfiguriert ist: bevor das Empfangsmodul (10) das Paket empfängt, das durch das mobile Endgerät weitergeleitet wird, eine Aufwärtsstrecken-PCC-Regel und/oder eine Abwärtsstrecken-PCC-Regel der Vorrichtung in dem lokalen Netz aus einer Richtlinien- und Gebührenberechnungsregelfunktion, PCRF, zu erfassen.

11. Gateway nach Anspruch 9, das ferner Folgendes umfasst:
ein Diensttypidentifizierungsmodul (70), das konfiguriert ist, einen Diensttyp des Aufwärtsstreckenpakets oder des Abwärtsstreckenpakets zu identifizieren;
ein Detektionsmodul (80), das konfiguriert ist: zu detektieren, ob ein QoS-Parameter in der Aufwärtsstrecken-PCC-Regel, die dem Aufwärtsstreckenpaket entspricht, eine Parameteranforderung des Diensttyps erfüllt, und falls ein Ergebnis der Detektion negativ ist, das Erfassungsmodul (30) aufzurufen, um eine neue Aufwärtsstrecken-PCC-Regel der Vorrichtung aus einer PCRF zu erfassen; oder zu detektieren, ob ein QoS-Parameter in der Abwärtsstrecken-PCC-Regel, die dem Abwärtsstreckenpaket entspricht, eine Parameteranforderung des Diensttyps erfüllt, und falls ein Ergebnis der Detektion negativ ist, das Erfassungsmodul (30) aufzurufen, um eine neue Abwärtsstrecken-PCC-Regel der Vorrichtung aus einer PCRF zu erfassen; und
ein Ersetzungsmodul (90), das konfiguriert ist, die Aufwärtsstrecken-PCC-Regel durch die neue Aufwärtsstrecken-PCC-Regel zu ersetzen oder die Abwärtsstrecken-PCC-Regel durch die neue Abwärtsstrecken-PCC-Regel zu ersetzen.

## Revendications

1. Procédé pour mettre en oeuvre une politique et une commande de chargement, consistant à :
recevoir (S101, S305) via une passerelle un paquet de liaison montante transféré par un terminal mobile et envoyé par un dispositif situé dans un réseau local pour lequel le terminal mobile agit en qualité d'agent, le dispositif effectuant une interaction de données avec la passerelle via un réseau d'accès sans fil, et dans lequel, après avoir obtenu un filtre de paquet TFT de modèle de flux de trafic correspondant à une adresse de protocole Internet IP du dispositif dans le paquet de liaison montante par mise en correspondance, le terminal mobile transfère le paquet de liaison montante via une porteuse correspondant au filtre de paquet TFT ; et
obtenir (S 102, S306) via la passerelle un filtre de paquet de politique et de commande de chargement PCC de liaison montante correspondant à l'adresse IP du dispositif dans le paquet de liaison montante par mise en correspondance, et effectuer une politique et une commande de chargement PCC sur le paquet de liaison montante en fonction d'une règle PCC de liaison montante trouvée par la mise en correspondance du paquet de liaison montante avec le filtre de paquet PCC de liaison montante ;
consistant en outre, avant de recevoir (S101, S305) le paquet de liaison montante, à :
convertir (S303) via la passerelle le filtre de paquet PCC de liaison montante dans la règle PCC de liaison montante en un filtre de paquet TFT ; et
envoyer (S303) via la passerelle un paramètre de qualité de service QOS dans chaque règle PCC de liaison montante et le filtre de paquet TFT au terminal mobile de sorte que le terminal mobile établisse une correspondance entre une porteuse correspondant au paramètre QOS et au filtre de paquet TFT.

2. Procédé selon la revendication 1, dans lequel avant de recevoir le paquet transféré par le terminal mobile, le procédé consiste en outre à acquérir (S302) une règle PCC de liaison montante du dispositif dans le réseau local depuis une fonction de politique et de règle de chargement PCRF.

3. Procédé selon la revendication 2, dans lequel l'acquisition de la règle PCC de liaison montante du dispositif dans le réseau local depuis la PCRF consiste spécifiquement à :
envoyer via la passerelle GW une adresse de segment de réseau du réseau local à la PCRF ; et
renvoyer via la PCRF une règle PCC de liaison montante correspondant à l'adresse de segment de réseau vers la GW.

4. Procédé selon la revendication 2, dans lequel l'acquisition de la règle PCC de liaison montante du dispositif dans le réseau local depuis la PCRF consiste spécifiquement à:
envoyer via la passerelle GW un identifiant du terminal mobile dans le paquet de liaison montante à la PCRF ;
acquérir par la PCRF depuis un dépôt de profil d'abonnement SPR, la règle PCC de liaison montante du dispositif dans le réseau local pour lequel le terminal mobile correspondant à l'identifiant du terminal mobile agit comme agent ; et
renvoyer par la PCRF la règle PCC de liaison montante à la GW.

5. Procédé selon la revendication 4, consistant en outre à :
acquérir par la PCRF une adresse de segment de réseau du réseau local depuis le SPR ; et
associer (S304) par la PCRF une adresse IP du terminal mobile à l'adresse du segment de réseau.

6. Procédé selon la revendication 1, dans lequel, après réception (S101) du paquet de liaison montante transféré par le terminal mobile, le procédé consiste en outre à :
identifier un type de service du paquet de liaison montante ;
acquérir une nouvelle règle PCC de liaison montante du dispositif depuis une fonction de politique et de règle de chargement PCRF si un paramètre QOS dans la règle PCC de liaison montante correspondant au paquet de liaison montante ne répond pas à une exigence de paramètre du type de service ; et
remplacer la règle PCC de liaison montante par la nouvelle règle PCC de liaison montante.

7. Procédé selon la revendication 1, dans lequel, avant la mise en correspondance par le terminal mobile du paquet de liaison montante avec le filtre de paquet TFT, le procédé consiste en outre à :
identifier (S502) par le terminal mobile un type de service du paquet de liaison montante et indiquer le type de service et l'adresse IP du dispositif dans le paquet de liaison montante à une fonction d'application AF ; fournir via l'AF l'adresse IP du dispositif dans le paquet de liaison montante et des informations de service qui comprennent au moins le type de service du paquet de liaison montante actuel à une fonction de politique et de règle de chargement PCRF ; générer par la PCRF une règle PCC de liaison montante, laquelle règle PCC de liaison montante correspond à l'adresse IP du dispositif dans le paquet de liaison montante ; et envoyer par la PCRF la règle PCC de liaison montante à une passerelle GW.

8. Procédé selon la revendication 1, consistant en outre à :
recevoir un paquet de liaison descendante envoyé par un réseau externe et possédant une adresse IP de destination qui est l'adresse IP du dispositif dans le réseau local ; et acquérir un filtre de paquet de politique et de commande de chargement PCC de liaison descendante mis en correspondance avec une adresse IP d'un dispositif dans le paquet de liaison descendante, et effectuer une PCC sur le paquet de liaison descendante en fonction d'une règle PCC de liaison descendante correspondant au filtre de paquet PCC de liaison descendante.

9. Passerelle comprenant :
un module de réception (10) conçu pour : recevoir un paquet de liaison montante transféré par un terminal mobile et envoyé par un dispositif situé dans un réseau local pour lequel le terminal mobile agit en qualité d'agent, dans lequel après avoir obtenu un filtre de paquet TFT de modèle de flux de trafic correspondant à une adresse de protocole Internet IP du dispositif dans le paquet de liaison montante par mise en correspondance, le terminal mobile transfère le paquet de liaison montante via une porteuse correspondant au filtre de paquet TFT ; et/ou recevoir un paquet de liaison descendante envoyé par un réseau externe et avec une adresse IP de destination qui est une adresse IP d'un dispositif dans un réseau local, le dispositif effectuant une interaction de données avec la passerelle via un réseau d'accès sans fil ;
un module de commande (20) conçu pour : obtenir un filtre de paquet de politique et de commande de chargement PCC de liaison montante correspondant à l'adresse IP du dispositif dans le paquet de liaison montante par mise en correspondance, et effectuer une politique et une commande de chargement PCC sur le paquet de liaison montante en fonction d'une règle PCC de liaison montante trouvée par la mise en correspondance du paquet de liaison montante avec le filtre de paquet PCC de liaison montante ; et/ou obtenir un filtre de paquet PCC de liaison descendante correspondant à l'adresse IP du dispositif dans le paquet de liaison descendante par mise en correspondance, et effectuer une PCC sur le paquet de liaison descendante en fonction d'une règle PCC de liaison descendante correspondant au filtre de paquet PCC de liaison descendante ;
un module de conversion (40) conçu pour, avant que le module de réception (10) reçoive le paquet de liaison montante transféré par le terminal mobile, convertir le filtre de paquet PCC de liaison montante dans la règle PCC de liaison montante en un filtre de paquet TFT ; et
un module d'envoi (50) conçu pour envoyer un paramètre QOS dans chaque règle PCC de liaison montante et le filtre de paquet TFT au terminal mobile de sorte que le terminal mobile établisse une correspondance entre une porteuse correspondant au paramètre QOS et le filtre de paquet TFT.

10. Passerelle selon la revendication 9, comprenant en outre un module d'acquisition (30) conçu pour, avant que le module de réception (10) reçoive le paquet transféré par le terminal mobile, acquérir une règle PCC de liaison montante et/ou une règle PCC de liaison descendante du dispositif dans le réseau local depuis une fonction de politique et de règle de chargement PCRF.

11. Passerelle selon la revendication 9, comprenant en outre :
un module d'identification de type de service (70) conçu pour identifier un type de service du paquet de liaison montante ou du paquet de liaison descendante ;
un module de détection (80) conçu pour : détecter si un paramètre QOS dans la règle PCC de liaison montante correspondant au paquet de liaison montante répond à une exigence de paramètre du type de service et, si un résultat de la détection est négatif, invoquer le module d'acquisition (30) pour acquérir une nouvelle règle PCC de liaison montante du dispositif depuis une PCRF ; ou détecter si un paramètre QOS dans la règle PCC de liaison descendante correspondant au paquet de liaison descendante répond à une exigence de paramètre du type de service et, si un résultat de la détection est négatif, invoquer le module d'acquisition (30) pour acquérir une nouvelle règle PCC de liaison descendante du dispositif depuis une PCRF ; et
un module de remplacement (90) conçu pour remplacer la règle PCC de liaison montante par la nouvelle règle PCC de liaison montante, ou remplacer la règle PCC de liaison descendante par la nouvelle règle PCC de liaison descendante.
